# EUROPEAN PATENT APPLICATION

(11) **EP 0 855 266 A1**
(43) Date of publication of application: **29.07.1998**
(21) Application number: 97101283.6
(22) Date of filing: 28.01.1997
(51) Int. Cl.: B32B 1/02, B32B 27/30, B65D 65/40

(54) **A laminated packaging material, a method of producing the same, and packaging containers produced from the material**

(71) Applicant: Tetra Laval Holdings & Finance SA, 1009 Pully (CH)
(72) Inventor: Bentmar, Mats, 233 37 Svedala (SE); Berlin, Mikael, 227 36 Lund (SE); Andrén, Sven, 222 53 Lund (SE)
(74) Representative: Müller, Hans-Jürgen, Dipl.-Ing.

(57) **Abstract**

An energy-saver laminated packaging material (10) for a packaging container which requires a lower proportion of polymer material than prior art packaging materials while retaining liquid barrier and heat-sealing properties is disclosed.

The packaging material comprises outer, liquid-tight, heat-sealable coatings (12, 13) of plastic, which include a copolymer of styrene and esters of acrylic acid and/or metacrylic acid.

The outer, liquid-tight layers (12, 13) are preferably applied onto a fibre material based core layer. Between the core layer (11) and the outer, liquid-tight plastic layers (14, 15), a primer or levelling layer of, for instance, starch (-derivate) or polyvinyl alcohol may be pre-applied on the surface of the core layer with a view to levelling out and homogenising any possible coarse core layer surfaces and thus minimising the quantity of applied copolymer in the outer layers, and also with a view to facilitating separation of the different layers in a recovery and recycling process.

Application of the outer, liquid-tight layers (12, 13) and possible primer or levelling layer (14, 15) preferably takes place by coating.

## Description

### TECHNICAL FIELD

The present invention relates to a laminated packaging material for a liquid-tight packaging container, the packaging material comprising outer, liquid-tight coatings of heat-sealable plastic. The present invention moreover relates to a method of producing the laminated packaging material, as well as to liquid-tight packaging containers produced from the laminated packaging material.

### BACKGROUND ART

Within the packaging industry, use has long been made of packages of a single-use nature (so-called disposable packages) for packaging and transporting products such as, for example, liquid foods.

In the prior art technology, the greater proportion of these liquid-tight plastic coatings consists of polyethylene. Polyethylene provides a good barrier against liquid penetration and possesses superior heat sealing properties.

Single-use disposable packages of the above-outlined type generally include a core layer consisting of a cellulose fibre based material, such as, for example, paper or paperboard, between the outer, liquid-tight coatings of polyethylene.

The composition of such packaging materials is intended to impart to the packed product the best possible product protection properties, at the same time as rendering the package both easy to manufacture and easy to use. A core layer of, for example, paper or paperboard gives the package good mechanical configurational stability such that the package may be distributed in a simple and rational manner and be conveniently handled. The outer, liquid-tight coatings of polyethylene protect the core layer against penetration by moisture and liquid, while at the same time making possible heat-sealing of joint seams in the packaging container.

Nevertheless, the prior art packaging materials suffer from a number of drawbacks.

In the above-described paper or paperboard based packaging material, the quantity of polyethylene based on the total weight of the packaging material is relatively great, at the same time as polyethylene - as a result of its high bonding strength - is difficult to separate from the fibre layer in connection with a recovery and recycling process.

### OBJECTS OF THE INVENTION

One object of the present invention is therefore to realise a novel laminated packaging material of the type described by way of introduction, without consequential problems of the type which afflict the prior art technology.

A further object of the present invention is to realise such a laminated packaging material as requires a smaller quantity of polymer than the prior art packaging materials to achieve the desired liquid barrier and heat-sealing properties.

Yet a further object of the present invention is to realise a resource-saving packaging material.

### SOLUTION

These and other objects are attained according to the present invention by a laminated packaging material possessing the characterizing feature as set forth in the characterizing clause of appended Claim 1. Variations and modifications of the laminated packaging material according to the present invention have further been given the characterizing features as set forth in appended subclaims 2 to 9.

It has proved that a copolymer of styrene and esters of acrylic acid and/or metacrylic acid may advantageously be applied as the liquid barrier according to the present invention. A layer of such copolymers moreover possesses superior heat-sealing properties. In particular, it has proved that liquid-tightness and heat-sealing properties comparable with those of polyethylene may be achieved at such slight application quantities as approximately 50 per cent of the conventional polyethylene quantity.

Apart from reduced material consumption, there will further be attained a laminated packaging material which, based on the total weight of the packaging material, includes a considerably reduced quantity of polymer, with the favourable consequence that the material per se will be better suited for recovery, recycling and reuse than the prior art packaging materials. As a result of the unique choice of barrier polymer according to the present invention, it has moreover proved that the material also possesses valuable properties from the environmental viewpoint - for example as much as 80 per cent of the total quantity of packaging material is biodegradable.

According to the present invention, the core layer in the laminated packaging material may be a conventional fibre layer of, for instance, paper or paperboard of suitable packaging qualities. Core layers of other materials may also be employed, such as plastic. Examples of such plastics may be polyolefin, e.g. polyethylene, polypropylene and copolymers of these olefin monomers, polyester, polyamide etc. In such cases where the core layer consists of a polymer, the core layer may have a solid structure or be a foamed or expanded polymer. Without departing from the spirit and scope of the inventive concept as herein disclosed, this polymer may also be a filled polymer, i.e. include a filler or extender admixed into the basic polymer composition.

According to yet a further aspect of the present invention, a simple method of producing the laminated packaging material will be realised. The method according to the invention has been given the characterizing features as set forth in appended Claim 10, while advantageous and expedient characterizing features of the method are apparent from appended subclaims 11 to 17.

According to still a further aspect of the present invention, there will be realised a liquid-tight, configurationally stable packaging container manufactured from the packaging material described in appended Claims 1 to 9.

### BRIEF DESCRIPTION OF THE ACCOMPANYING DRAWING

The present invention will now be described in greater detail hereinbelow, with the aid of preferred embodiments and with particular reference to the accompanying Drawing, in which:
Fig. 1 schematically shows a cross section of a laminated packaging material according to one preferred embodiment of the present invention; and
Fig. 2 schematically illustrates a method of producing the laminated packaging material according to the present invention.

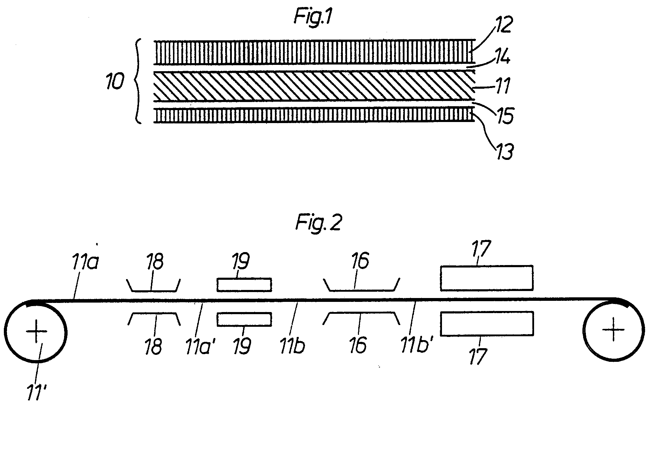

It should first be observed that the packaging material structure illustrated in Fig. 1 is not intended to restrict the scope of the present invention, but is merely intended to illustrate one embodiment of a material structure according to a highly simplified embodiment of the present invention. Thus, the number of individual layers may be freely varied in compliance with the desired final use of the packaging material.

### DESCRIPTION OF PREFERRED EMBODIMENTS

Referring to the Drawing, Fig. 1 schematically illustrates a cross section of a laminated packaging material according to the present invention, carrying the generic reference numeral 10. In the illustrated, simplified embodiment, the laminated packaging material comprises a core layer 11 of a fibre material or other suitable material, for example a polymer.

Examples of such fibre materials may be paper or paperboard of conventional packaging qualities.

On one or both sides of the core layer, there are outer, liquid-tight coatings of plastic 12 and 13, which include (or consist of) a copolymer of styrene and esters of acrylic acid and/or metacrylic acid.

In order to achieve sufficient product protection properties for the packed product, one of the above-mentioned outer liquid-tight copolymer layers 12, i.e. that coating which is the inside coating in the finished package, should be applied in a quantity of at least 5 g/m², for example between 5 and 20 g/m², preferably between 10 and 15 g/m², calculated on dry weight (TS). The other of these outer, liquid-tight plastic coatings 13 is applied in a quantity of at most 10 g/m², for example between 2 and 10 g/m², and preferably between 3 and 5 g/m², based on TS.

If the surface of the core layer is coarse and uneven or has uneven absorption properties, it may be appropriate to prime the surface with a levelling layer 14, 15 on those sides of the core layer to which the liquid-tight copolymer layer is to be applied in order to reduce material consumption on application of the copolymer. One such primer or levelling layer comprises a substance such as starch, a starch derivate or polyvinyl alcohol. As a result of the water-soluble nature of such a substance, a primer layer of this type may also be applied with a view to facilitating separation of the different layers in material recovery and recycling. The primer layer may also consist of a mixture of polyvinyl alcohol and a gelling substance such as, for example, agar, carragenan or gelatin. A suitable weight ratio between polyvinyl alcohol and gelling substance may vary from about 80:20 to about 99:1. The primer layers 14 and 15 are suitably applied in a quantity of between 1 and 5 g/m² based on TS.

The illustrated packaging material 10 in Fig. 1 may, according to the invention, be produced in the manner which is schematically illustrated in Fig. 2 in which, for purposes of clarity, the same reference numerals have been employed as in Fig. 1 for identical or similar details.

A core layer web is unreeled from a magazine reel 11' and is led past an applicator 16 disposed adjacent the web and with whose aid an aqueous dispersion of the above-mentioned copolymer is applied, preferably by coating, on both sides of the web. This dispersion is applied in such a quantity that a totally integrated and continuous layer 12, 13 is formed after drying. The web 11b' is led further past a drier apparatus 17 acting against the treated side of the web, for example an IR drier (infrared radiation) or a hot air unit for driving off water and drying the applied layers 12, 13. Drying of the layers 12, 13 should preferably take place at temperatures of at least 80°C, most preferably at at least 120°C.

According to another embodiment of the method according to the present invention, a primer layer is pre-applied on the core layer web 11a as is also illustrated in Fig. 2. The core layer web is thus led first past a pre-applicator 18 disposed adjacent the web and by means of which a primer or levelling layer 14, 15 of a substance selected from among starch, starch derivate, polyvinyl alcohol or a mixture of gelling substances and polyvinyl alcohol is applied on one or both sides of the web. This primer layer 14, 15 is applied, preferably by a coating process, in such a quantity that any possible coarse or uneven surface in the core layer web 11a is smoothened out, with the result that the quantity of copolymer dispersion which is thereafter to be applied may be reduced to a minimum and applied in a uniform, homogeneous layer 12, 13. Since this primer layer is soluble in water, it may also function as a slip layer for facilitating separation of the plastic and fibre layers. In those cases when this primer layer includes polyvinyl alcohol, gas barrier properties will also be provided, in particular oxygen gas barrier properties. The web 11a' is thereafter led further past a pre-drier 19 which acts on the treated side of the web and which may or may not be of the same type as the above-mentioned drier apparatus 17. The thus applied core layer web 11b is then treated as described above, i.e. a dispersion of water and copolymer is applied using an applicator 16 on both sides of the web, and the web 11b' is thereafter led past a drier apparatus 17 for driving off water and drying the applied layers 12, 13.

From a sheet or web-shaped laminated packaging material 10 which is preferably provided in a per se known manner with fold facilitating crease lines, decorative artwork etc., liquid-tight and dimensionally stable packaging containers are produced in a per se known manner using conventional, rational packing and filling machines of the type which form, fill and seal finished packages. From a web of, for example, the laminated packaging material 10, there are thus produced packages in that the web is first reformed into a tube by both longitudinal edges of the web being united with one another in a so-called lap joint seal, which is effected by heat sealing, i.e. a fusion of the plastic in the outer layers of the plastic material. The tube is filled with the relevant contents and is then divided into individual packages by repeated transverse sealing of the tube transversely of the longitudinal axis of the tube and below the level of the contents in the tube. The packages are separated from one another by incisions in the transverse sealing zones and are given the desired geometric, parallelepipedic final form by a further fold forming and sealing operation, for the formation of finished packaging containers.

It will thus be apparent from the foregoing description that, in a simple manner and by simple means, the present invention satisfies its established objects and realises an effectively laminated packaging material possessing superior liquid barrier and heat-sealing properties, with lower consumption of raw materials and a greater proportion of biodegradable material and, consequently, reduced pressure on the environment.

While the present invention has been described with reference to specific embodiments shown on the Drawing, it will be obvious to a person skilled in the art that numerous modifications and variations may be made, such as, for example, including more intermediate layers of paper/paperboard and/or intermediate layers of the above-mentioned copolymer without departing from the spirit and scope of the inventive concept as this is defined in the appended Claims.

## Claims

1. A laminated packaging material (10) for a liquid-tight packaging container, the packaging material comprising outer, liquid-tight coatings (12, 13) of heat-sealable plastic, **characterized in that** the material in said plastic coatings includes a copolymer of styrene and esters of acrylic acid and/or metacrylic acid.

2. The laminated packaging material as claimed in Claim 1, **characterized in that** the material in said plastic coatings (12, 13) includes a copolymer of styrene and esters of acrylic acid and metacrylic acid.

3. The laminated packaging material as claimed in Claim 1 or 2, **characterized in that** said liquid-tight plastic coatings (12, 13) are applied on both outer sides of the packaging material.

4. The laminated packaging material as claimed in any of Claims 1 to 3, **characterized in that** said plastic coatings (12, 13) are applied on both sides of a core layer (11).

5. The laminated packaging material as claimed in Claim 4, **characterized in that** the core layer (11) consists of a fibre material.

6. The laminated packaging material as claimed in any of the preceding Claims, **characterized in that** one of said outer liquid-tight plastic coatings (12) is applied in a quantity of at least 5, for example between 10 and 15 g/m², based on TS.

7. The laminated packaging material as claimed in any of the preceding Claims, **characterized in that** the other of said outer liquid-tight plastic coatings (13) is applied in a quantity of at most 10 g/m², for example between 3 and 5 g/m², based on TS.

8. The laminated packaging material as claimed in any of the preceding Claims, **characterized in that** the packaging material has primer or levelling layers (14, 15) applied between the outer, liquid-tight plastic coatings (12, 13) and the core layer (11).

9. The laminated packaging material as claimed in Claim 8, **characterized in that** said primer or levelling layer (14, 15) is applied in a quantity of between 1 and 5 g/m² based on TS.

10. A method of producing a laminated packaging material as claimed in Claim 1, **characterized in that** a layer (12, 13) which includes an aqueous dispersion of a copolymer of styrene and esters of acrylic acid and/or metacrylic acid is applied on both sides of a web (11) which is thereafter dried for driving off water.

11. The method as claimed in Claim 10, **characterized in that** said copolymer dispersion is applied by means of coating.

12. The method as claimed in any of Claims 10 to 11, **characterized in that** one of said outer liquid-tight plastic coatings (12) is applied in a quantity of at least 5 g/m², for example between 10 and 15 g/m², based on TS.

13. The method as claimed in any of Claims 10 to 12, **characterized in that** the other of said outer liquid-tight plastic coatings is applied in a quantity of at most 10 g/m², for example between 3 and 5 g/m², based on TS.

14. The method as claimed in any of Claims 10 to 13, **characterized in that** the web is dried by IR radiation or by means of hot air which is blown onto both sides of the web.

15. The method as claimed in any of Claims 10 to 14, **characterized in that** the web is dried at a temperature of at least 80°C.

16. The method as claimed in any of Claims 10 to 15, **characterized in that** a primer or levelling layer (14, 15) is applied to the web (11) prior to application of said copolymer dispersion.

17. The method as claimed in Claim 16, **characterized in that** said primer or levelling layer (14, 15) is applied by coating.

18. A liquid-tight packaging container, **characterized in that** it is produced from a laminated packaging material according to any of Claims 1 to 9.
